# EUROPÄISCHE PATENTSCHRIFT

(11) **EP 2 501 945 B1**
(45) Veröffentlichungstag und Bekanntmachung des Hinweises auf die Patenterteilung: **30.09.2015**
(21) Anmeldenummer: 10787050.3
(22) Anmeldetag: 18.11.2010
(51) Int. Cl.: F16C 13/00, F16C 13/02, F16C 19/30, F16C 23/08

(54) **WALZENPRESSE**
ROLLER PRESS
PRESSE À CYLINDRES

(30) Priorität: 19.11.2009 DE 102009053958
(43) Veröffentlichungstag der Anmeldung: 26.09.2012
(73) Patentinhaber: Schaeffler Technologies AG & Co. KG, 91074 Herzogenaurach (DE)
(72) Erfinder: SCHMIDT, Oliver, 97422 Schweinfurt (DE)
(86) Internationale Anmeldenummer: PCT/EP2010/067716
(87) Internationale Veröffentlichungsnummer: WO 2011/061242

(56) Entgegenhaltungen:
- DE-A1- 4 110 205
- DE-A1- 4 316 579
- JP-A- 11 010 209
- US-A- 2 123 754
- US-A- 3 403 950

## Beschreibung

### Gebiet der Erfindung

Die Erfindung betrifft eine Walzenpresse, insbesondere Zement- oder Grundstoffwalzenpresse, umfassend zwei nebeneinander angeordnete, achsparallel ausgerichtete Walzen, wobei jede Walze durch mindestens eine Wälzlageranordnung gegenüber mindestens einem Gehäuseelement drehbar gelagert ist.

Eine solche Walzenpresse ist aus der US 2 123 754 A bekannt. 15

### Stand der Technik

Derartige Walzenpressen werden z.B. in sogenannten Gutbett-Walzenmühlen für die Zerkleinerung mineralischer Rohstoffe eingesetzt. Dabei sind die beiden Walzen - auch Mahlwalzen genannt - waagrecht nebeneinander angeordnet, d.h. beide Walzenachsen liegen in einer waagrechten Ebene. Die Walzen werden in der waagrechten Ebene nun derart positioniert, dass sich zwischen ihren äußeren Mantelflächen (Walzenmantel) ein Walzenspalt ergibt. Über dem Walzenspalt befindet sich das zu zerkleinernde Material, das schwerkraftbedingt in den Spalt gedrückt wird. Indem die beiden Walzen nun in entsprechender Richtung gegenläufig zueinander angetrieben werden, wird das zu zerkleinernde Material schwerkraftbedingt sowie durch Reibung in den Walzenspalt gezogen und zerquetscht. Die beiden Walzen werden bei diesem Prozess durch sehr hohe, radial auf jede Walze wirkende Kräfte in Richtung des Walzenspaltes gedrückt.

Diese hohen Radialkräfte verursachen eine Durchbiegung der Walzen. So wird jede Walze an ihren beiden axialen Enden, also dort wo die Walzen gegenüber einem Gehäuseelement drehbar gelagert sind, in Richtung des Walzenspaltes gedrückt und im Bereich des Walzenspaltes, also im axial mittigen Bereich, durch das zu zerkleinernde Material von dem Walzenspalt weggedrückt. Die Durchbiegung der Walzen erschwert die Lagerung dieser gegenüber dem Gehäuseelement.

Beispielsweise stößt die Lagerung der Walzen alleine durch Zylinderrollenlager bald an ihre Grenzen, da Zylinderrollenlager nur sehr bedingt Schiefstellungen und Durchbiegungen einer Welle vertragen. Des Weiteren können Fluchtungsfehler der Gehäuse im Zylinderrollenlager nicht kompensiert werden. Insbesondere reduziert sich im Falle einer Durchbiegung der zu lagernden Welle die Lebensdauer der Zylinderrollenlagerung spürbar. Walzenpressen mit Zylinderrollenlagern können somit keinen hohen Radialkräften ausgesetzt werden.

Aus der DE 41 10 205 A1 ist eine Walzenpresse bekannt, umfassend zwei durch einen Walzenspalt beabstandete Walzen, die in Richtung des Walzenspaltes gedrückt werden. Um eine drehbare Lagerung einer Walze zu ermöglichen, die unempfindlich gegenüber der im Betrieb auftretenden Durchbiegung der Walze ist, setzt die DE 41 10 205 A1 ein Wälzlager in Form eines Pendelrollenlagers ein. Zwar kann ein Pendelrollenlager eine Schiefstellung der zu lagernden Welle in gewissen Grenzen tolerieren. Von Nachteil bei der Lagerung der DE 41 10 205 A1 ist jedoch, dass die Lagerung durch ein Pendelrollenlager radial einen relativ großen Bauraum einnimmt.

Ein Axial-Gelenklager dient in erster Linie zur Aufnahme einer Axiallast. Axial-Gelenklager haben hierfür kugelige Gleitflächen, typischerweise an einer Gehäusescheibe und einer Wellenscheibe. Die Projektion dieser Gleitflächen auf eine senkrecht zur Lagerachse des Axial-Gelenklagers stehenden Ebene ergibt eine größere Fläche als die Projektion der Gleitflächen auf eine die Lagerachse umfassende Ebene; somit können entsprechend höhere Axialkräfte als Radialkräfte übertragen werden.

### Aufgabe der Erfindung

Der Erfindung liegt die Aufgabe zugrunde, eine Walzenpresse der eingangs genannten Art bereitzustellen, die einerseits eine hohe Belastung durch Querkräfte zulässt, ohne dabei eine Verringerung der Lebensdauer der Lagerung in Kauf nehmen zu müssen, und deren Lagerung andererseits einfach und kostengünstig ist und einen möglichst geringen radialen Baurraum einnimmt.

### Zusammenfassung der Erfindung

Diese Aufgabe wird durch eine Walzenpresse gemäß dem unabhängigen Anspruch 1 gelöst.

Die Erfindung beruht auf der Erkenntnis, die bei den gattungsgemäßen Walzenpressen auftretende Walzendurchbiegung und die daraus resultierende Schiefstellung zwischen Walze und Gehäuseelement im Bereich der Wälzlageranordnung nicht durch die Wälzlagerung selbst aufzunehmen. Vielmehr soll diese Schiefstellung komplett durch ein Axial-Gelenklager kompensiert werden. Dies führt dazu, dass die Wälzlageranordnung von Schiefstellungen befreit wird und lediglich für eine Übertragung von Radial- und gegebenenfalls Axialkräften ausgelegt werden muss. An die Wälzlageranordnung werden somit geringere Anforderungen gestellt, so dass einfachere, kostengünstigere und insbesondere einen geringeren Bauraum benötigende Wälzlageranordnungen eingesetzt werden können.

Bevorzugte Ausführungsformen der Erfindung sind in den Unteransprüchen angegeben.

Gemäß einer Ausführungsform ist jede Walze durch zwei Wälzlageranordnungen gegenüber zwei separaten Gehäuseelementen drehbar gelagert. Die beiden Wälzlageranordnungen sind dabei an axialen Endbereichen der Walzen angeordnet, typischerweise weisen die Walzen hierfür im Durchmesser reduzierte Lagerzapfen auf. Vorzugsweise weist dabei jedes Gehäuseelement eine Abstützung gegenüber einer Anschlusskonstruktion durch ein erstes Axial-Gelenklager zum Aufnehmen von auf die Walze wirkende Radialkräfte auf. Insgesamt weist die Walzenpresse somit vier Wälzlageranordnungen und vier erste Axial-Gelenklager auf. Denkbar ist, dass sich die beiden Axial-Gelenklager einer Walze gegenüber einer gemeinsamen Anschlusskonstruktion über zwei separate Gehäuseelemente abstützen.

Gemäß einer weiteren Ausführungsform ist das erste Axial-Gelenklager waagrecht angeordnet, um waagrecht auf die Walze wirkende Radialkräfte aufzunehmen. Die Lagerachse des Axial-Gelenklagers verläuft also innerhalb einer waagrechten Ebene. Insbesondere ist die Lagerachse des ersten Axial-Gelenklagers dabei in einer die Walzenachsen umfassenden waagrechten Ebene angeordnet. Vorzugsweise verläuft die Lagerachse des ersten Axial-Gelenklagers senkrecht zur Walzenachse. Durch diese Anordnung des ersten Axial-Gelenklagers können insbesondere die durch den Betrieb entstehenden, auf die Walzen wirkenden Radialkräfte (ausgehend von dem Walzenspalt) aufgenommen werden, d.h. die sogenannten Betriebskräfte.

Gemäß einer weiteren Ausführungsform ist das erste Axial-Gelenklager unter einem Winkel zu einer waagrechten Ebene angeordnet, um auf die Walze in dem Winkel zur waagrechten Ebene wirkende Radialkräfte aufzunehmen. Die Lagerachse des Axial-Gelenklagers verläuft also unter einem Winkel zu einer waagrechten Ebene und vorzugsweise wiederum dabei senkrecht zur Walzenachse. Das Axial-Gelenklager kann somit so angeordnet werden, dass es entlang seiner Axialrichtung die kombinierten Betriebskräfte und Gewichtskräfte der Walze aufnimmt.

Die Abstützung des mindestens einen Gehäuseelements gegenüber der Anschlusskonstruktion umfasst ein zweites Axial-Gelenklager zum Aufnehmen von auf die Walze wirkende Radialkräfte, wobei eine Lagerachse des ersten Axial-Gelenklagers und eine Lagerachse des zweiten Axial-Gelenklagers einen Winkel einschließen. Die beiden Axial-Gelenklager können somit derart positioniert werden, dass die jeweiligen Lagerachsen in Richtungen von auf die Walzen wirkende Radialkräfte liegen. Insbesondere ist gemäß einer weiteren Ausführungsform das erste Axial-Gelenklager waagrecht angeordnet ist und das zweite Axial-Gelenklager senkrecht angeordnet. Das erste Axial-Gelenklager dient somit im Wesentlichen dazu die Betriebskräfte aufzunehmen, während das zweite Axial Gelenklager im Wesentlichen die Gewichtskräfte der Walze im Stillstand aufnimmt. Gemäß einer bevorzugten Ausführungsform, wirkt das erste Axial-Gelenklager und/oder das zweite Axial-Gelenklager mit einer zur jeweiligen Lagerachse senkrecht stehenden, ebenen Gleitfläche zusammen. Weiter vorzugsweise wirkt das waagrecht angeordnete, zweite Axial-Gelenklager mit einer waagrechten Gleitfläche zusammen. Die waagrechte Gleitfläche wird z.B. durch eine entsprechende Beschichtung einer Außenfläche des Axial-Gelenklagers oder durch eine waagrechte Gleitschiene gebildet, auf der das Axial-Gelenklager sitzt. Die waagrechte Gleitfläche gewährleistet, dass bei waagrechter Anordnung des zweiten Axial-Gelenklagers die waagrechten Betriebskräfte nur durch das erste Axial-Gelenklager aufgenommen werden. Weiterhin ist die komplette Walze auf der waagrechten Gleitfläche verschiebbar, z.B. für Montage- oder Demontagezwecke. Denkbar ist, das erste und das zweite Axial-Gelenklager (ohne waagrechte Gleitfläche) identisch auszubilden, d.h. insbesondere eine identische Gehäusescheibe und eine identische Wellenscheibe zu verwenden. Möglich ist aber auch, unterschiedlich ausgebildete Axial-Gelenklager zu verwenden. So kann beispielsweise das zweite Axial-Gelenklager bei einer senkrechten Anordnung kleiner ausgeführt sein als das waagrecht angeordnete erste Axial-Gelenklager, da gewöhnlich die Gewichtskräfte einer Walze weitaus geringer sind, als die auf die Walze einwirkenden Betriebskräfte.

Gemäß einer Ausführungsform umfasst die Wälzlageranordnung eine mehrreihige Zylinderrollenlageranordnung und/oder eine mehrreihige Kegelrollenlageranordnung. Diese Wälzlagertypen können die notwendigen Radialkräfte und gegebenenfalls auch Axialkräfte aufnehmen, bauen jedoch insbesondere radial sehr klein. Durch Erhöhung der Anzahl der Lagerreihen kann außerdem die Tragfähigkeit der Wälzlageranordnung erhöht werden, ohne einen größeren radialen Bauraum zu benötigen. Möglich sind selbstverständliche auch Wälzlageranordnungen mit mehreren Lagerreihen unterschiedlicher Wälzlagertypen.

Gemäß einer Ausführungsform weist ein Axial-Gelenklager ein erstes Bauteil mit einer konvexen Kontaktfläche und ein zweites Bauteil mit einer zur konvexen Kontaktfläche abgestimmten konkaven Kontaktfläche auf. Typischerweise handelt es sich bei derartigen Axial-Gelenklagern um Standardlager, die mit dem Gehäuseelement einerseits und der Anschlusskonstruktion andererseits z.B. über entsprechende Aufnahmen zusammenwirken. Denkbar ist aber auch, dass durch das Gehäuseelement und/oder die Anschlusskonstruktion eine Gehäusescheibe oder eine Wellenscheibe direkt ausgebildet wird. Das erste und/oder zweite Bauteil wird somit durch das Gehäuseelement und/oder die Anschlusskonstruktion einstückig ausgebildet. Zwischen den beiden Kontaktflächen befindet sich vorzugsweise eine reibungs- und/oder verschleißmindernde Beschichtung, z.B. aus Kunststoff.

### Kurze Beschreibung der Zeichnungen

Ausführungsbeispiele der Erfindung werden im Folgenden anhand der beiliegenden Figuren erläutert. Dabei zeigen:
- Figur 1: eine gattungsgemäße Walzenpresse,
- Figur 2: ein erstes Ausführungsbeispiel einer erfindungsgemäßen Walzenpresse,
- Figur 3: einen Ausschnitt eines zweiten Ausführungsbeispiels einer erfindungsgemäßen Walzenpresse,
- Figur 4: ein drittes Ausführungsbeispiel einer erfindungsgemäßen Walzenpresse,
- Figur 5: ein viertes Ausführungsbeispiel einer nicht erfindungsgemäßen Walzenpresse, und
- Figur 6: ein Axial-Gelenklager zur Verwendung in einer erfindungsgemäßen Walzenpresse.

### Detaillierte Beschreibung der Zeichnungen

Gleiche oder funktionsgleiche Elemente sind in den Figuren mit gleichen Bezugszeichen versehen.

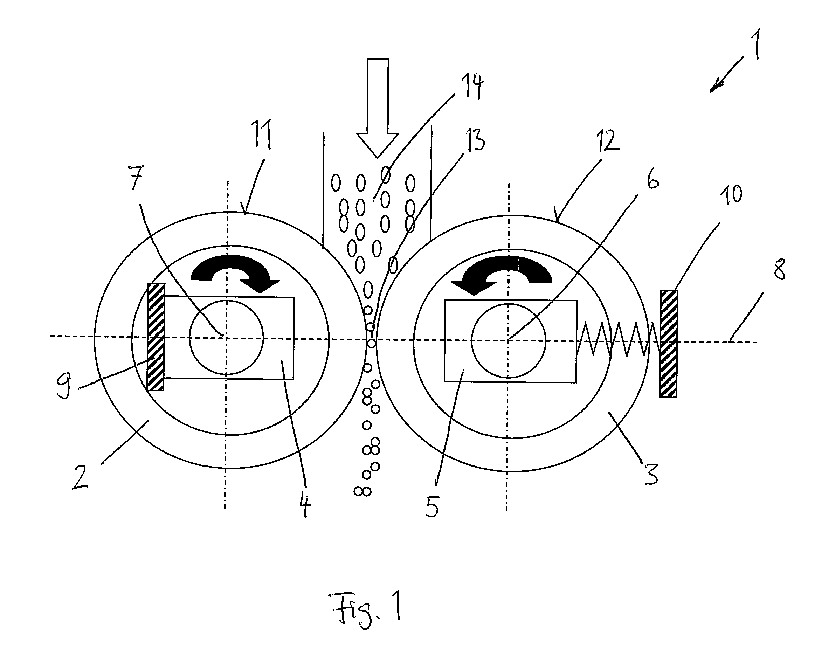

Figur 1 zeigt eine gattungsgemäße Walzenpresse 1, umfassend zwei Walzen 2, 3, die mittels nicht näher dargestellten Wälzlagerungen in Gehäuseelementen 4, 5 drehbar gelagert sind. Beide Walzen 2, 3 besitzen den gleichen Außendurchmesser.

Die Walzen 2, 3 sind nebeneinander und achsparallel angeordnet, d.h. Walzenachsen 6, 7 beider Walzen 2, 3 befinden sich in einer gemeinsamen, waagrecht angeordneten Ebene 8.

Während ein Gehäuseelement 4 fest mit einer Anschlusskonstruktion 9 verbunden ist, ist das andere Gehäuseelement 5 gegenüber einer weiteren Anschlusskonstruktion 10 beweglich angeordnet. Dadurch lässt sich der Walzenspalt 13 zwischen den Außenmantelflächen 11, 12 der Walzen 2, 3 einstellen.

Das zu zerkleinernde Material 14 wird dem Walzenspalt 13 von oben zugeführt, d.h. es wird dem Walzenspalt 13 schwerkraftbedingt zugeführt. Es handelt sich somit um eine Walzenpresse 1 einer Gutbett-Walzenmühle.

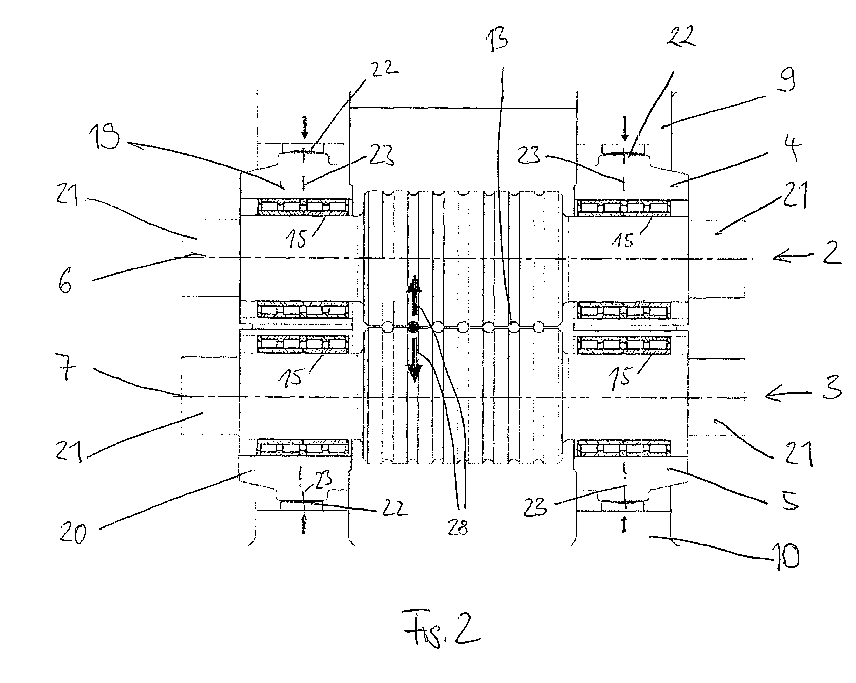

Figur 2 zeigt ein erstes Ausführungsbeispiel einer erfindungsgemäßen Walzenpresse in einer Draufsicht.

Jede der beiden Walzen 2, 3 ist durch je zwei Wälzlageranordnungen 15 innerhalb von Gehäuseelementen 4, 5, 19, 20 drehbar gelagert. Als Wälzlager sind jeweils pro Wälzlageranordnung 15 vierreihige Zylinderrollenlager eingesetzt, die auf Lagerzapfen 21 axial außerhalb des Walzenspaltes 13 sitzen. Jedes Gehäuseelement 4, 5, 19, 20 weist eine Bohrung auf, innerhalb der das Wälzlager angeordnet ist.

Die separat ausgebildeten Gehäuseelemente 4, 5, 19, 20 sind gegenüber Anschlusskonstruktionen 9, 10 durch erste Axial-Gelenklager 22 abgestützt. Die ersten Axial-Gelenklager 22 sind waagrecht angeordnet, d.h. die Lagerachsen 23 der ersten Axial-Gelenklager 22 liegen in einer die Walzenachsen 6, 7 umfassenden Ebene. Die ersten Axial-Gelenklager 22 können somit betriebsbedingte Radialkräfte 28, die im Walzenspalt 13 angreifen und die Walzen 2, 3 auseinanderdrücken, entlang ihrer Lagerachsen 23 aufnehmen.

Gegenüber dem aus der DE 41 10 205 A1 bekannten Stand der Technik, wonach die Wälzlageranordnung (dort Pendelrollenlager) fest mit einem Gehäuseelement verbunden ist, wird erfindungsgemäß das die Wälzlageranordnung 15 aufnehmende Gehäuseelement 4, 5, 19, 20 gegenüber einer weiteren Anschlusskonstruktion 9, 10 durch ein erstes Axial-Gelenklager 22 beweglich gelagert.

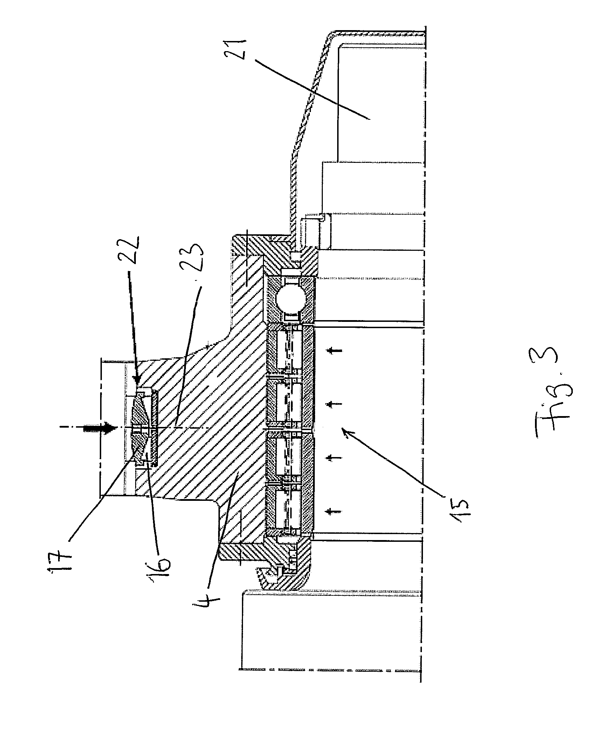

Figur 3 zeigt einen Ausschnitt eines zweiten Ausführungsbeispiels einer erfindungsgemäßen Walzenpresse.

Im Unterschied zum ersten Ausführungsbeispiel besteht die Wälzlageranordnung 15 aus einem nur Radialkräfte aufnehmendem vierreihigen Zylinderrollenlager sowie einem Radial- und Axialkräfte aufnehmenden Kugellager.

Das erste Axial-Gelenklager 22 besteht aus einer Gehäusescheibe 16 und einer Wellenscheibe 17. Wie im ersten Ausführungsbeispiel befindet sich das erste Axial-Gelenklager 22 axial auf Höhe der Wälzlageranordnung 15. Insbesondere befindet sich das erste Axial-Gelenklager 22 axial in der Mitte der nur Radialkräfte aufnehmenden Wälzlager.

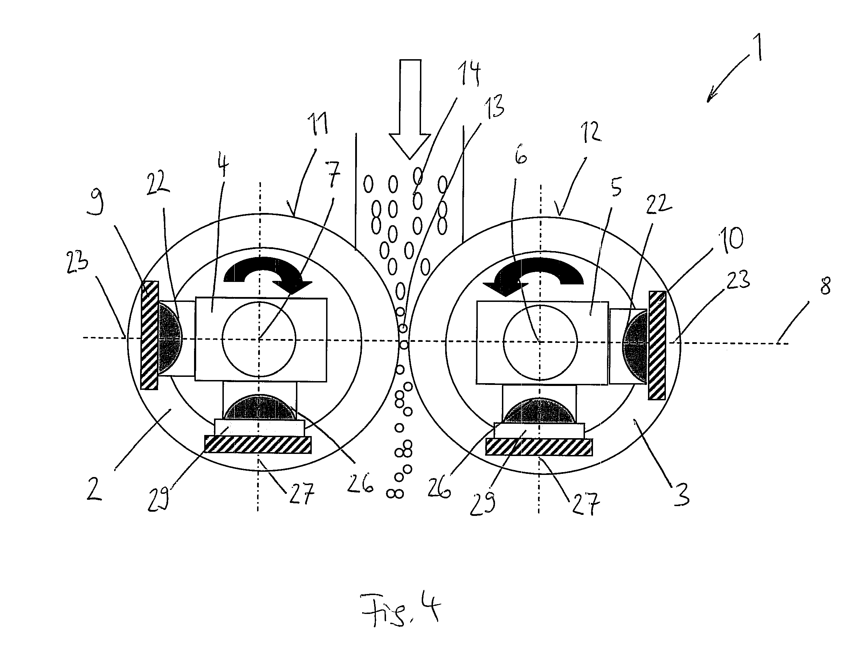

Figur 4 zeigt ein drittes Ausführungsbeispiel einer erfindungsgemäßen Walzenpresse.

Dargestellt ist eine Walzenpresse 1 deren zwei Walzen 2, 3 durch je zwei Lagerstellen gegenüber Anschlusskonstruktionen 9, 10 gelagert sind. Jede Lagerstelle umfasst ein nicht dargestelltes Wälzlager sowie zwei Axial-Gelenklager, nämlich ein erstes Axial-Gelenklager 22 und ein zweites Axial-Gelenklager 26. Das erste Axial-Gelenklager 22 ist waagrecht angeordnet, d.h. es eignet sich insbesondere zur Aufnahme von waagrechten Radialkräften, z.B. Betriebskräften auf die Walzen. Das zweite Axial-Gelenklager 26 ist senkrecht angeordnet, d.h. es eignet sich zur Aufnahme von Gewichtskräften der Walzen 2, 3.

Wie auch bei den vorherigen Ausführungsbeispielen werden die Gehäuseelemente 4, 5 nur über die Axial-Gelenklager 22, 26 gegenüber den Anschlusskonstruktionen 9, 10 abgestützt.

Die zweiten Axial-Gelenklager 26 wirken mit waagrechten Gleitflächen 29 zusammen, die waagrecht ausgerichtet sind.

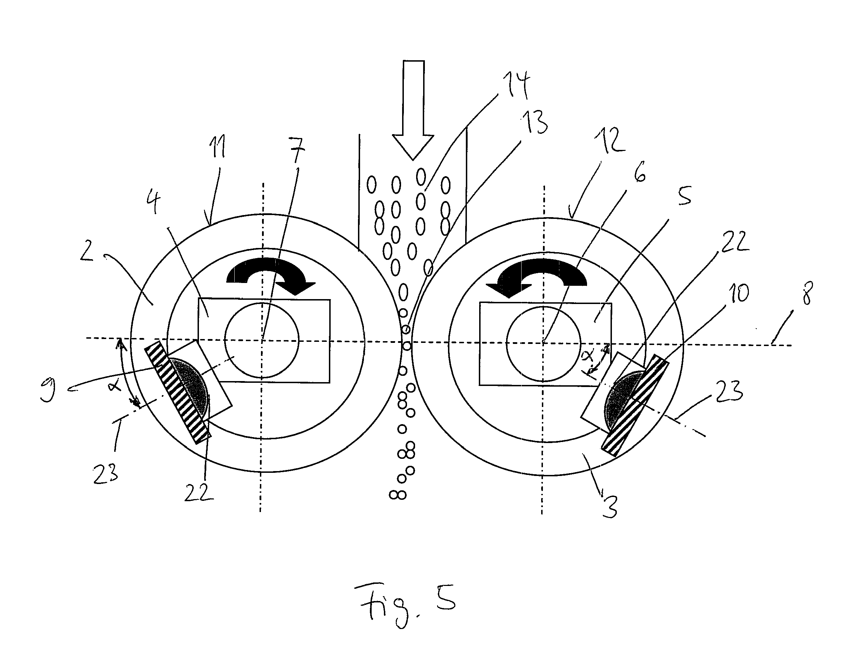

Figur 5 zeigt ein viertes Ausführungsbeispiel einer nicht erfindungsgemäßen Walzenpresse.

Im Gegensatz zum Ausführungsbeispiel nach Figur 4 werden die Gehäuseelemente 4, 5 nur über erste Axial-Gelenklager 22 gegenüber den Anschlusskonstruktionen 9, 10 abgestützt. Diese ersten Axial-Gelenklager 22 sind unter einem Winkel alpha (α) zu einer waagrechten Ebene 8 angeordnet, um auf die Walzen 2, 3 in dem Winkel alpha (α) zur waagrechten Ebene 8 wirkende Radialkräfte aufzunehmen. Die ersten Axial-Gelenklager 22 können somit Betriebskräfte und Gewichtskräfte aufnehmen.

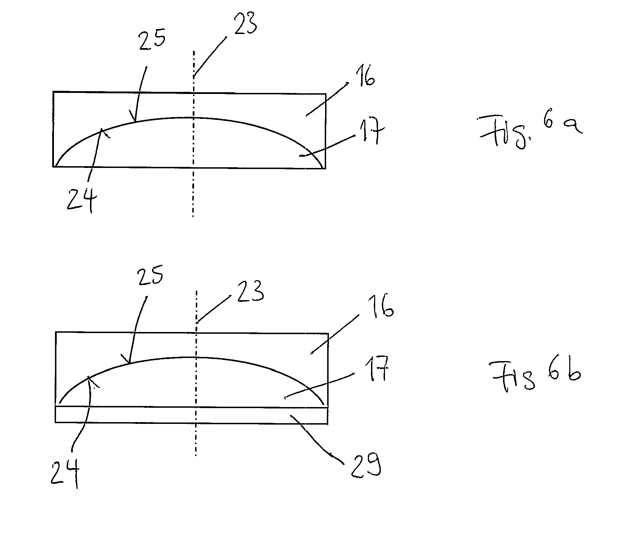

Figur 6a zeigt ein Axial-Gelenklager wie es in einer erfindungsgemäßen Walzenpresse eingesetzt werden kann.

Das Axial-Gelenklager umfasst eine Gehäusescheibe 16 sowie eine Wellenscheibe 17 mit jeweils sphärischen Kontaktflächen 24, 25. Die Gehäusescheibe 16 umfasst eine konkave Kontaktfläche 24 während die Wellenscheibe eine korrespondierende konvexe Kontaktfläche 25 umfasst.

Das Axial-Gelenklager gemäß Figur 6b umfasst zusätzlich noch eine Gleitfläche 29. Die Gleitfläche 29 ist eben ausgebildet, d.h. es handelt sich um eine plane Fläche. Hierdurch kann erreicht werden, dass nur ein Axial-Gelenklager die Betriebskräfte aufnimmt (z.B. ein erstes Axial-Gelenklager gemäß Figur 6a), während das andere Axial-Gelenklager vorwiegend die Gewichtskräfte aufnimmt (z.B. ein zweites Axial-Gelenklager gemäß Figur 6b).

### Bezugszeichenliste

- 1: Walzenpresse
- 2: Walze
- 3: Walze
- 4: Gehäuseelement
- 5: Gehäuseelement
- 6: Walzenachse
- 7: Walzenachse
- 8: Ebene
- 9: Anschlusskonstruktion
- 10: Anschlusskonstruktion
- 11: Außenmantelfläche
- 12: Außenmantelfläche
- 13: Walzenspalt
- 14: Material
- 15: Wälzlageranordnung
- 16: Gehäusescheibe
- 17: Wellenscheibe
- 19: Gehäuseelement
- 20: Gehäuseelement
- 21: Lagerzapfen
- 22: erstes Axial-Gelenklager
- 23: Lagerachse
- 24: Kontaktfläche
- 25: Kontaktfläche
- 26: zweites Axial-Gelenklager
- 27: Lagerachse
- 28: Radialkräfte
- 29: Gleitfläche

## Patentansprüche

1. Walzenpresse (1), insbesondere Zement- oder Grundstoffwalzenpresse, umfassend zwei nebeneinander angeordnete, achsparallel ausgerichtete Walzen (2, 3), wobei jede Walze (2,3) durch mindestens eine Wälzlageranordnung (15) gegenüber mindestens einem Gehäuseelement (4, 5, 19, 20) drehbar gelagert ist, **gekennzeichnet durch** eine Abstützung des mindestens einen Gehäuseelements (4, 5, 19, 20) gegenüber einer Anschlusskonstruktion (9, 10) **durch** ein erstes Axial-Gelenklager (22) und ein zweites Axial-Gelenklager (26) zum Aufnehmen von auf die Walze (2, 3) wirkenden Radialkräften,wobei eine Lagerachse (23) des ersten Axial-Gelenklagers (22) und eine Lagerachse (27) des zweiten Axial-Gelenklagers (26) einen Winkel einschließen.

2. Walzenpresse (1) nach Anspruch 1, **dadurch gekennzeichnet, dass** jede Walze (2, 3) durch zwei Wälzlageranordnungen (15) gegenüber zwei separaten Gehäuseelementen (4, 5, 19, 20) drehbar gelagert ist.

3. Walzenpresse (1) nach Anspruch nach Anspruch 1 oder Anspruch 2, **dadurch gekennzeichnet, dass** das erste Axial-Gelenklager (22) waagerecht angeordnet ist und das zweite Axial-Gelenklager (26) senkrecht angeordnet ist.

4. Walzenpresse (1) nach einem der vorangegangenen Ansprüche, **dadurch gekennzeichnet, dass** das erste Axial-Gelenklager (22) und/oder das zweite Axial-Gelenklager (26) mit einer zur jeweiligen Lagerachse (23, 27) senkrecht stehenden, ebenen Gleitfläche (29) zusammen wirkt.

5. Walzenpresse (1) nach einem der vorangegangenen Ansprüche, **dadurch gekennzeichnet, dass** die Wälzlageranordnung (15) eine mehrreihige Zylinderrollenlageranordnung und/oder eine mehrreihige Kegelrollenlageranordnung umfasst.

6. Walzenpresse (1) nach einem der vorangegangenen Ansprüche, **dadurch gekennzeichnet, dass** ein Axial-Gelenklager (22, 26) ein erstes Bauteil mit einer konvexen Kontaktfläche (25) und ein zweites Bauteil mit einer zur konvexen Kontaktfläche (25) abgestimmten konkaven Kontaktfläche (24) aufweist.

## Claims

1. Roller press (1), in particular a cement or base material roller press, comprising two rollers (2, 3) which are arranged next to one another and oriented in an axially parallel manner, wherein each roller (2, 3) is rotatably mounted with respect to at least one housing element (4, 5, 19, 20) by at least one rolling bearing arrangement (15), **characterized by** the at least one housing element (4, 5, 19, 20) being supported with respect to a connecting construction (9, 10) by a first axial joint bearing (22) and a second axial joint bearing (26) for taking up radial forces acting on the roller (2, 3), wherein a bearing axis (23) of the first axial joint bearing (22) and a bearing axis (27) of the second axial joint bearing (26) enclose an angle.

2. Roller press (1) according to Claim 1, **characterized in that** each roller (2, 3) is rotatably mounted with respect to two separate housing elements (4, 5, 19, 20) by two rolling bearing arrangements (15).

3. Roller press (1) according to Claim 1 or Claim 2, **characterized in that** the first axial joint bearing (22) is arranged horizontally and the second axial joint bearing (26) is arranged vertically.

4. Roller press (1) according to one of the preceding claims, **characterized in that** the first axial joint bearing (22) and/or the second axial joint bearing (26) interacts with a planar sliding surface (29) perpendicular to the respective bearing axis (23, 27).

5. Roller press (1) according to one of the preceding claims, **characterized in that** the rolling bearing arrangement (15) comprises a multi-row cylindrical roller bearing arrangement and/or a multi-row conical roller bearing arrangement.

6. Roller press (1) according to one of the preceding claims, **characterized in that** an axial joint bearing (22, 26) has a first component with a convex contact surface (25) and a second component with a concave contact surface (24) coordinated with the convex contact surface (25).

## Revendications

1. Presse à cylindres (1), notamment presse à cylindres pour ciment ou matière première, comprenant deux cylindres (2, 3) disposés côte à côte, orientés parallèlement à l'axe, chaque cylindre (2, 3) étant disposé de façon à pouvoir pivoter par rapport à au moins un élément de carter (4, 5, 19, 20) par le biais d'au moins un dispositif de palier à rouleau (15), **caractérisée par** un renfort de l'au moins un élément de carter (4, 5, 19, 20) par rapport à une construction de raccordement (9, 10) via un premier palier articulé axial (22) et un deuxième palier articulé axial (26) permettant de recevoir les forces radiales s'exerçant sur le cylindre (2, 3), un axe de palier (23) du premier palier articulé axial (22) et un axe de palier (27) du deuxième palier articulé axial (26) incluant un angle.

2. Presse à cylindres (1) selon la revendication 1, **caractérisée en ce que** chaque cylindre (2, 3) est disposé de façon à pouvoir pivoter par rapport à deux éléments de carter (4, 5, 19, 20) séparés par le biais de deux dispositifs de palier à rouleau de roulement (15).

3. Presse à cylindres (1) selon la revendication 1 ou 2, **caractérisée en ce que** le premier palier articulé axial (22) est disposé à l'horizontale et que le deuxième palier articulé axial (26) est disposé à la verticale.

4. Presse à cylindres (1) selon l'une quelconque des revendications précédentes, **caractérisée en ce que** le premier palier articulé axial (22) et/ou le deuxième palier articulé axial (26) agit conjointement avec une surface de glissement (29) plane perpendiculaire à l'axe de palier (23, 27) respectif.

5. Presse à cylindres (1) selon l'une quelconque des revendications précédentes, **caractérisée en ce que** le dispositif de palier à rouleau (15) comprend un agencement de palier cylindrique à plusieurs rangées et/ou un agencement de palier conique à plusieurs rangées.

6. Presse à cylindres (1) selon l'une quelconque des revendications précédentes, **caractérisée en ce qu'**un palier articulé axial (22, 26) comporte un premier composant avec une surface de contact (25) convexe et un deuxième composant avec une surface de contact (24) concave coïncidant avec la surface de contact (25) convexe.
